# EUROPÄISCHE PATENTSCHRIFT

(11) **EP 1 299 936 B1**
(45) Veröffentlichungstag und Bekanntmachung des Hinweises auf die Patenterteilung: **09.05.2007**
(21) Anmeldenummer: 01953649.9
(22) Anmeldetag: 05.07.2001
(51) Int. Cl.: H02M 1/00, H02M 7/757

(54) **SCHUTZSCHALTUNG FÜR EINE NETZGEFÜHRTE THYRISTORBRÜCKE**
PROTECTIVE CIRCUIT FOR A NETWORK-CONTROLLED THYRISTOR BRIDGE
CIRCUIT DE PROTECTION POUR PONT THYRISTOR COMMUTE PAR LE RESEAU

(30) Priorität: 11.07.2000 AT 11922000
(43) Veröffentlichungstag der Anmeldung: 09.04.2003
(73) Patentinhaber: Siemens AG Österreich, 1210 Wien (AT)
(72) Erfinder: REISCHER, Wilhelm, A-1210 Wien (AT); KARL, Leo, 2551 Enzesfeld (AT); PICHORNER, Heinz, A-1220 Wien (AT); WÖHRER, Franz, A-1220 Wien (AT)
(74) Vertreter: Matschnig, Franz
(86) Internationale Anmeldenummer: PCT/AT2001/000220
(87) Internationale Veröffentlichungsnummer: WO 2002/005411

(56) Entgegenhaltungen:
- DE-A- 2 641 545
- DE-A- 3 836 274
- DE-C- 3 129 111
- FR-A- 2 703 858
- ZIEGLER M ET AL: "PERFORMANCE OF A TWO STEPS COMMUTATED MATRIX CONVERTER FOR AC-VARIABLE-SPEED DRIVES" 8TH EUROPEAN CONFERENCE ON POWER ELECTRONICS AND APPLICATIONS. LAUSANNE, CH, SEPT. 7 - 9, 1999, EPE. EUROPEAN CONFERENCE ON POWER ELECTRONICS AND APPLICATIONS, BRUSSLS: EPE ASSOCIATION, BE, Bd. CONF. 8, 7. September 1999 (1999-09-07), Seiten 1-9, XP000878431 ISBN: 90-75815-04-2

## Beschreibung

Die Erfindung bezieht sich auf eine Schutzschaltung für eine netzgeführte Thyristorbrücke, welche zur Energiespeisung eines an sie angeschlossenen Energiekreises sowie zur Rückspeisung aus diesem Kreis eingerichtet ist, und welche zwischen die Thyristorbrücke und den Energiekreis geschaltet ist.

Eine Thyristorbrücke zur Energierückspeisung in ein 3-Phasen-Wechselstromnetz liegt in vielen Fällen antiparallel zu einer Einspeisebrücke, welche die 3-Phasenspannung des Drehstromnetzes in eine Zwischenkreis-Gleichspannung für einen Wechselrichter umwandelt, der wiederum einen Drehstrommotor speist. Beispielsweise, um den Motor abzubremsen, wird Energie aus dem Zwischenkreis über die Rückspeisebrücke und von hier in das 3-Phasennetz zurückgespeist. Die Erfindung bezieht sich aber in gleicher Weise auf Thyristorbrücken zur Energieübertragung aus einem Gleichstromnetz, z. B. dem Gleichstromnetz einer Photovolfaikanlage oder der Bremsenergie einer Gleichstrommaschine, in ein Drehstromnetz.

Solche Brücken und ihre Theorie sind beispielsweise in dem Buch "Leistungselektronik", Franz Zach, Springer Verlag Wien-New York 1979, beschrieben, und eine Kipperkennung mit einer Brückenansteuerung zur Verhinderung eines Querzündens ist z. B. in der AT 404 414 B der Anmelderin beschrieben.

DE3129111C1 offenbart eine Löscheinrichtung für einen Umkehr-Stromrichter mit zwei antiparallel geschalteten Dreiphasen-Brückenschaltungen. Dabei ist ein erster Anschluß eines mit einer Ladeschaltung verbundenen Löschkondensators über Entkopplungsdioden mit den Wechselspannungseingängen des Stromrichters verbunden. Der zweite Anschluß des Löschkondensators ist über einen ersten Löschthyristor mit dem ersten Gleichstromausgang des Stromrichters und über einen gleichsinnig gepolten zweiten Löschthyristor mit dem zweiten Gleichstromausgang des Stromrichters verbunden. Anti-parallel zu jedem Löschthyristor ist eine Diode geschaltet. Mit dieser Löscheinrichtung ist es möglich, bei einem Umkehr-Stromrichter alle Thyristoren beider Brückenschaltungen zu löschen. Dabei ist lediglich ein Löschkondensator mit zwei Löschthyristoren sowie fünf Dioden erforderlich.

FR2703858 offenbart eine Schutzschaltung für eine Diodebrücke, welche zur Energiespeisung eines an sie angeschlossenen Energiekreises eingerichtet ist, und welche zwischen die Brücke und den Energiekreis geschaltet ist. In einem Längszweig der Schutzschaltung ist ein, im Speisesinn gepolter MOSFET-Transistor vorgesehen, welcher bei Auftreten eines Überstromerkennungssignals, das einer dem Transistor zugeordneten Ansteuerschaltung zugeführt ist, abschaltbar ist.

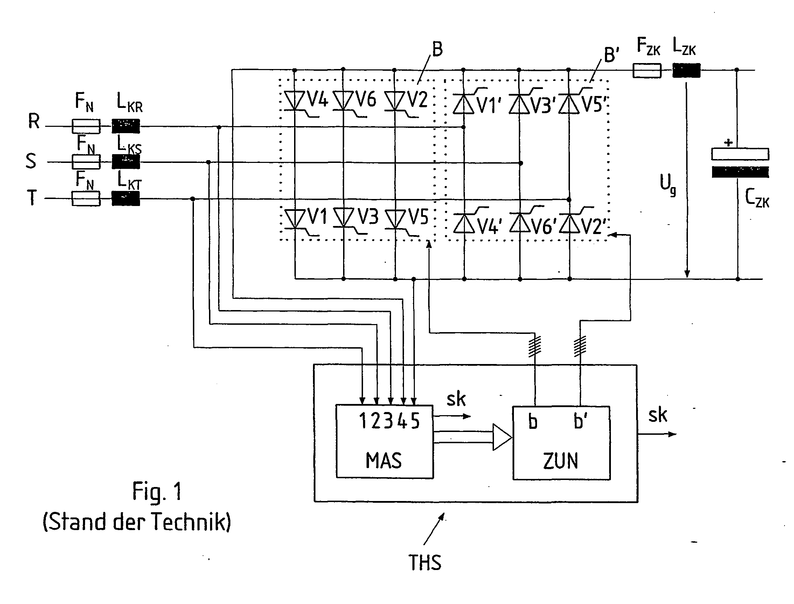

In Fig. 1 ist eine Doppelbrücke nach dem Stand der Technik mit einer Einspeisebrücke B und einer Rückspeisebrücke B' gezeigt. Die Einspeisebrücke besteht aus je zwei gleichsinnig in Serie geschalteten Thyristoren V4, V1 bzw. V6, V3 bzw. V2, V5. Sämtliche Thyristorpaare liegen an einer Spannung Ug, die hier an einem Zwischenkreiskondensator C_{ZK} auftritt. Zwischen diesem Kondensator C_{ZK} und der Brücke liegt eine Zwischenkreissicherung F_{ZK} sowie gegebenenfalls eine Zwischenkreisdrossel L_{ZK}. Die Verbindungspunkte der Thyristoren V1', V4' ; V3', V6'; V5', V2' jedes Paares der Rückspeisebrücke B' liegen je über eine Kommutierungsdrossel L_{KR}, L_{KS}, L_{KT} und eine Netzsicherung F_{N} an einer Phase R, S, T eines Drehstromnetzes.

Die Thyristoren V1, ..., V6 werden über eine hier nicht dargestellte Thyristorsteuerung THS netzsynchron gezündet, wobei die Nummerierung der Thyristoren der Zündreihenfolge bei einem Rechtsdrehfeld an den Phasen R, S, T entspricht. Die Ansteuerschaltung ist im Allgemeinen auch Teil eines Regelkreises, wobei eine Regelung z. B. auf die Gleichspannung Ug durch Verschieben der Thyristorzündzeitpunkte erfolgt.

Bei Anwendung der Thyristorbrücken zur Speisung einer Gleichstrommaschine tritt diese an die Stelle des Zwischenkreiskondensators. Die Spannung wechselt bei dieser Anwendung in den meisten Fällen ihr Vorzeichen, und der Betrieb erfolgt in allen vier Quadranten.

Bei zu geringer Spannung im Drehstromnetz oder zu hoher Zwischenkreisspannung Ug kann es bei Energierückspeisung in das Drehstromnetz zu dem sogenannten "Wechselrichterkippen" kommen, das in der zuvor genannten Literaturstelle "Zach" gleichfalls beschrieben ist (p. 236f). Hierbei tritt folgender Vorgang auf.

Es leiten je zwei Thyristoren der Brücke, z. B. Thyristor V1 und Thyristor V6, bei Stromfluss in der Netzphase RS (Netzspannung U_{RS}). Im folgenden Zyklus sollte der Zwischenkreisstrom i_{d} bei Abgabe eines Zündimpulses an Thyristor V2 von Thyristor V6 auf den Thyristor V2 kommutieren, wobei der Thyristor V1 auch weiterhin Strom führt. Als kommutierende Spannung wirkt der Momentanwert der verketteten Spannung Usr.

Hier ist zu bemerken, dass zugleich mit der Zündimpulsabgabe an den Thyristor V2 auch an den Thyristor V1 ein zweites Mal ein Zündimpuls abgegeben wird, denn jeder Thyristor muss im Stationärbetrieb während 2/6 der Netzperiode Strom führen. Dieser Zweitimpuls ist jedoch nur erforderlich, um auch bei lückendem Strom einen Stromfluss sicherzustellen. Im Idealfall, bei nicht lückendem Strom, wäre ein solcher zweiter Zündimpuls nicht erforderlich, da ein gezündeter Thyristor so lange leitend bleibt, bis der Strom Null geworden ist.

Falls aus einem der oben genannten Gründe, z. B. wegen Unterspannung des Netzes, dieses Kommutieren versagt, bleibt der Stromfluss in den Thyristoren V1 und V6 aufrecht und steigt noch stark an, da die weiterhin wirksame Spannung U_{RS} immer positiver wird, und der treibenden Spannung Ug des Zwischenkreiskondensators C_{ZK} immer weniger entgegen wirken kann. Der eben beschriebene Vorgang wird als "Wechselrichterkippen" bezeichnet.

Der Stromanstieg in dem Kreis "Netzphase R - Thyristor V1 - Zwischenkreiskapazität C_{ZK} - Thyristor V6 - Netzphase S" wird durch die Größe der wirksamen Induktivität, bestehend aus Kommutierungsdrossel L_{KR} + L_{KS} + Netzimpedanz - Zwischenkreisdrossel L_{ZK} bestimmt. Nach einer gewissen Zeit, d.h. bei einem bestimmten Überstrom in dem Kreis, unterbricht eine der in der Netzzuleitung vorgesehenen Sicherungen F_{N} oder die im Zwischenkreis liegende Sicherung F_{ZK} oder aber eine nicht gezeigte, mit einem Thyristor in Serie liegende Sicherung den Stromfluss und verhindert so ein Zerstören der Thyristoren V1 und V6.

Falls jedoch das Auslösen der Sicherung so lange dauert, dass schon vor dem Unterbrechen des Stromes der gemäß der Zündreihenfolge nächste Thyristor gezündet wird - im betrachteten Beispiel der Thyristor V3 -, so tritt ein so genanntes "Querzünden" ein, bei dem die Zwischenkreisspannung Ug direkt über zwei Thyristoren - in dem hier betrachteten Fall die Thyristoren V3 und V6 - kurzgeschlossen wird. Befände sich in dem Stromkreis "Thyristor V6 - Thyristor V3 - Zwischenkreiskapazität C_{ZK}" nicht die Drossel L_{ZK}, so wäre der Stromanstieg lediglich durch die Leitungsinduktivitäten des Zwischenkreises begrenzt. Da diese aber üblicherweise sehr gering sind, wäre der Stromanstieg so steil, dass ein Schutz der Thyristoren durch die Sicherung F_{ZK} im Zwischenkreis oder durch eine Sicherung in den Thyristorzweigen nicht möglich wäre. Bei genügend großer Energie im Gleichstromnetz, hier in der Zwischenkreiskapazität C_{ZK}, kommt es daher bei Auftreten eines "Querzünders" zu einer Zerstörung der entsprechenden Thyristoren, im gewählten Beispiel der Thyristoren V3 und V6, ehe eine Sicherung den Stromfluss unterbrechen kann.

Das Wechselrichterkippen als prinzipielle Eigenschaft netzgeführter Stromrichterschaltungen kann nicht vermieden werden, doch können richtig dimensionierte Netz-, Zwischenkreis- oder Thyristorzweigsicherungen in vielen, jedoch nicht in allen Fällen die Thyristoren vor Zerstörung schützen.

Das "Querzünden", das eine Folge des "Wechselrichterkippens" ist, tritt dann auf, wenn - wie oben beschrieben - nicht jene Thyristoren Strom führen, die gemäß der vorgegebenen Zündreihenfolge stromführend sein sollten. Ein Zerstören von Thyristoren im Falle eines "Querzündens" kann durch eine entsprechend bemessene Drossel L_{ZK} im Zwischenkreis verhindert werden, welche den Stromanstieg begrenzt, oder durch eine Schaltung nach der AT 404 414, welche das Wechselrichterkippen erkennt und dementsprechend bei Abgabe von Zündimpulsen an bestimmte Thyristoren unterbindet.

Dazu werden gemäß Fig.1 einer Mess- und Auswerteschaltung MAS der Thyristorsteuerung THS die Spannungen an den einzelnen Thyristoren zugeführt, und die dann dazu errechneten Werte werden einer Zündschaltung ZUN zugeführt. Für die vorliegende Erfindung ist jedenfalls wichtig, dass beispielsweise eine Schaltung nach Fig. 1 auch ein Kipperkennungssignal sₖ liefert.

Die Aufgabe der Erfindung liegt darin, herkömmliche Schaltelemente, wie Sicherungen, mechanische Schnellschalter oder aufwendige Zwangskommuiterschaltungen sowie Strombegrenzungsdrosseln soweit wie möglich zu vermeiden und den Schaltungsaufwand sowie die Projektierungsarbeit für die einzelnen Anwendungsfälle zu verringern.

Diese Aufgabe wird mit einer Schutzschaltung der eingangs genannten Art gelöst, bei welcher erfindungsgemäß in einem Längszweig der Schutzschaltung zumindest ein, im Rückspeisesinn gepolter IGBT-Transistor mit einer Antiparalleldiode vorgesehen ist, welcher bei Auftreten eines Kipperkennungssignals, das einer dem Transistor zugeordneten Ansteuerschaltung zugeführt ist, abschaltbar ist.

Dank der Erfindung kann ein auftretender Kippstrom rasch abgeschaltet werden, ohne dass es zu ernsthaften und/oder kostspieligen Betriebsstörungen kommt, wobei die Wirksamkeit auch gegeben ist, wenn die Zwischenkreisinduktivität nur sehr kleine Werte, z. B. unter 100 µH, besitzt.

Falls Energierückspeisung auch durch Umkehr der Ausgangsspannung eintreten kann, sieht eine zweckmäßige Variante vor, dass in dem Längszweig der Schutzschaltung zwei gegensinnig gepolte IGBT-Transistoren in Serie angeordnet sind.

Eine andere, aus den gleichen Gründen vorteilhafte Ausführungsform zeichnet sich dadurch aus, dass in ihrem Längszweig ein erster IGBT-Transistor in Serie mit einer ersten Hilfsdiode liegt und parallel zu dieser ersten Serienschaltung eine zweite Serienschaltung, bestehend aus einem zweiten IGBT-Transistor und einer zweiten Hilfsdiode, wobei innerhalb der Serienschaltungen die Dioden und Transistoren gleichsinnig gepolt sind, die Dioden und Transistoren einer Serienschaltung jedoch gegensinnig zu den Dioden und Transistoren der anderen Serienschaltungen.

Um allfällige Überlastungen der internen Antiparalleldiode zu vermeiden, kann vorgesehen sein, dass der Antiparalleldiode eines IGBT-Transistors eine externe Diode parallelgeschaltet ist. Dadurch werden auch die Verluste in Einspeiserichtung verringert.

In Hinblick auf die Möglichkeit des Auftretens schädlicher Überspannungen, insbesondere aufgrund des Schaltvorganges an den Impedanzen des Netzes und/oder des Gleichstromkreises, ist es empfehlenswert, wenn ihr Eingang und/oder Ausgang durch einen Überspannungsableiter geschützt ist, bzw. wenn die Kollektor-Emitter-Strecke des zumindest einen IGBT-Transistors durch einen Überspannungsableiter geschützt ist.

Da in der Ansteuerung der Thyristorbrücke ohnedies ein Signal vorliegt, bzw. leicht ableitbar ist, das ein Wechselrichterkippen angibt, empfiehlt sich eine Ausführung, bei welcher das Kipperkennungssignal von einer Steuerschaltung der Thyristorbrticke geliefert ist.

Ein auch aus anderen Gründen als einem Wechselrichterkippen auftretender zu hoher Längsstrom kann erkannt werden, falls als Kipperkennungssignal die Höhe der Sättigungsspannung des zumindest einen IGBT-Transistors herangezogen ist.

Die Erfindung samt weiterer Vorteile ist im folgenden unter Bezugnahme auf die beigefügten Zeichnungen näher erläutert, in welcher zeigen:
- Fig.1: eine Doppel-Thyristorbrücke nach dem Stand der Technik,
- Fig. 2: das Prinzipschaltbild einer Ausführungsform der Erfindung mit einem einzigen IGBT-Transistor,
- Fig. 3.: in einem Detail eine Variante nach Fig. 2 mit einer zugeschalteten externen Diode und einem Überspannungsableiter,
- Fig. 4: eine Ausführungsform der Erfindung mit zwei in Serie geschalteten IGBT-Transistoren,
- Fig.5: eine andere Ausführungsform der Erfindung, gleichfalls mit zwei IGBT-Transistoren und
- Fig. 6: eine Ausführung ähnlich der in Fig. 2 dargestellten, bei welcher die Schutzschaltung jedoch nur im Rückspeisekreis vorgesehen ist.

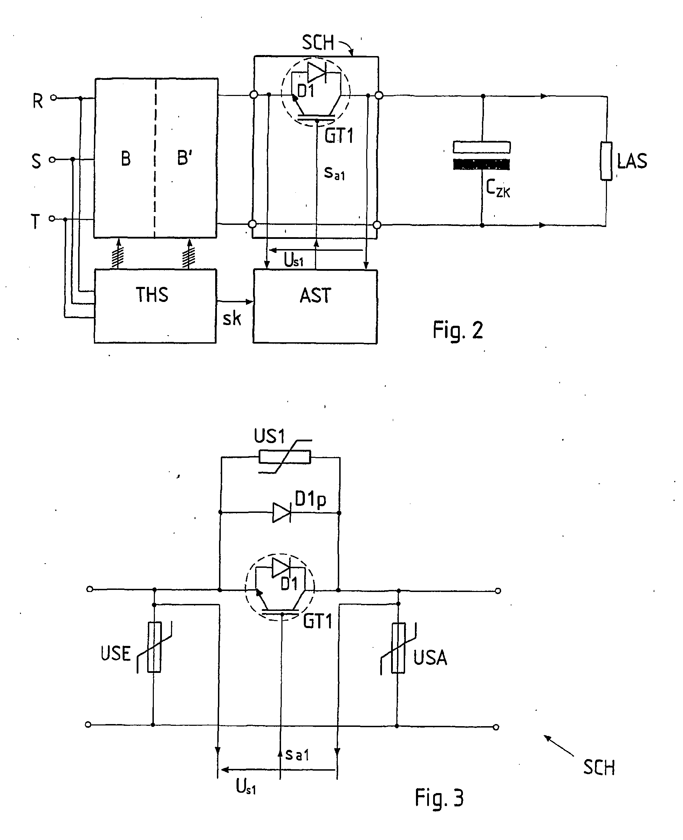

Fig. 2 zeigt eine Schutzschaltung SCH nach der Erfindung, die zwischen die netzgeführte Thyristorbrücke B, B' (siehe die vorangegangene Erläuterung der Fig. 1) und einen Zwischenkreis oder Lastkreis mit einem Zwischenkreiskondensator C_{ZK} und einer Last LAS geschaltet ist. Die Schutzschaltung besitzt in einem Längszweig einen IGBT-Transistor GT1, der auch eine in Bezug auf seine Durchlassrichtung antiparallele Diode, eine sogenannte Antiparalleldiode D1, besitzt. Diese Diode D1 ist üblicherweise in einem Gehäuse mit dem Transistor GT1 integriert.

Für die Ansteuerung des Transistors GT1 ist eine Ansteuerschaltung AST vorgesehen, welcher ein Kipperkennungssignal sₖ zugeführt ist, das im vorliegenden Fall von der Thyristorsteuerung THS stammt Weiters kann, wie hier gezeigt, der Ansteuerschaltung AST auch die Spannung zwischen Kollektor und Emitter des Transistors GT1 zugeführt sein, die in Fig. 2 mit uₛ₁ bezeichnet ist.

Der Transistor GT1 kann während des Betriebes auch im Einspeisebetrieb über ein Ansteuersignal sₐ₁ dauernd eingeschaltet bleiben. Der Strom in Einspeiserichtung fließt über die Antiparalleldiode D1, wodurch die Einspeise-Zusatzverluste geringer gehalten werden, als die Rückspeisezusatzverluste über den Transistor GT1. Die Ansteuerung des IGBT-Transistors T1 bzw. die Rückmeldung seiner Kollektor-Emitter-Spannung kann über geeignete potentialtrennende Schaltungen erfolgen, z. B. über Optokoppler oder mit Hilfe von Lichtwellenleitern..

Tritt ein Wechselrichterkippen ein und somit ein Signal sₖ auf, so wird der über das Signal sₐ₁ angesteuerte Transistor GT1 abgeschaltet. Weiters kann bei hohen Strömen durch den Transistor GT1 auch die Höhe seiner Sättigungsspannung als Abschaltkriterium herangezogen werden, um den Transistor auch bei zu hohen Strömen - ein Fall der natürlich auch bei Wechselrichterkippen auftritt, abzuschalten. Jedenfalls werden dadurch der IGBT-Transistor selbst, das Stromrichtergerät und letztlich auch die Sicherungen geschützt. Es ist demnach auch möglich, auf ein spezifisches Kipperkennungssignal sₖ zu verzichten und als Basis für die Abschaltung die erwähnte Sättigungsspannung zu verwenden.

Um die Verfügbarkeit der Stromrichteranordnung zu erhöhen, kann der IGBT-Transistor nach jedem Abschalten wiederholt eingeschaltet werden. Ein Wechselrichterkippen führt dann lediglich zu einem kurzdauernden Spannungseinbruch, welcher den Arbeitsprozess nicht unterbricht.

Die Darstellung nach Fig. 3 zeigt zusätzliche Maßnahmen zur Erhöhung der Leistungsfähigkeit bzw. der Sicherheit. Da bei marktüblichen IBGT-Transistoren die integrierte Antiparalleldiode D1 oft schwächer ausgelegt ist als die Kollektor-Emitter-Strecke des Transistors und außerdem eine höhere Durchlassspannung aufweisen kann als diskrete Dioden, kann die Stromtragfähigkeit des Längszweigs durch Parallelschalten einer externen und entsprechend den Anforderungen stärkeren Diode D1p erhöht werden und die Verluste in Rückspeiserichtung werden verringert.

Fig. 3 zeigt weiters den Einsatz von Überspannungsableitern, der vor allem dann sinnvoll ist, wenn aufgrund des Schaltvorganges an den Impedanzen des Netzes und/oder des Gleichstromzwischenkreises das Auftreten schädlicher Überspannungen zu befürchten ist. Hier sind der Eingang der Schutzschaltung SCH durch einen Überspannungsschutzableiter USE, der Ausgang durch einen Überspannungsschutzableiter USA und die Kollektor-Emitter-Strecke des Transistors GT1 durch einen Überspannungsableiter US1 geschützt. Derartige Überspannungsableiter sind für weite Spannungs- und Strombereiche im Handel erhältlich und meist als Varistoren ausgebildet.

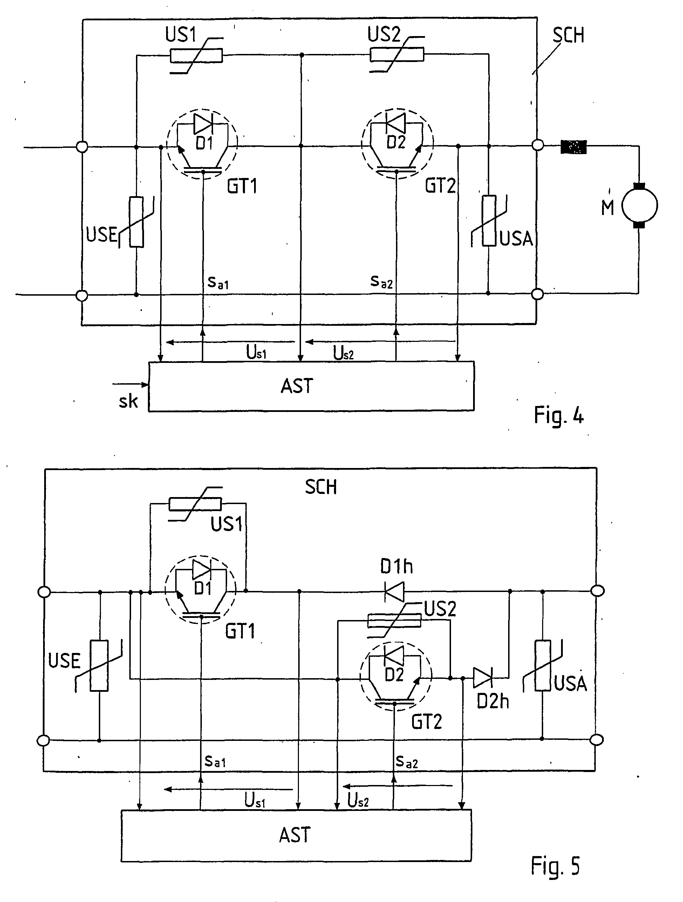

Falls Energierückspeisung nur durch Umkehr der Stromrichtung eintritt und nicht durch Umkehr der Ausgangsspannung so genügt ein einziger IGBT-Transistor im Längszweig der Schutzschaltung, wie dies in Fig. 2 und 3 gezeigt wurde. Bei Gleichstromantrieben mit Betrieb in allen vier Quadranten können sich jedoch Strom und Spannung umdrehen. In solchen Fällen ist der Einsatz eines zweiten IGBT-Transistors erforderlich, was in den Fig. 4 und 5 gezeigt und erläutert ist.

Fig. 4 zeigt im Längszweig der Schutzschaltung SCH zwei in Serie, jedoch gegenpolig geschaltete IGBT-Transistoren GT1, GT2. Analog zu Fig. 3 sind Überspannungsableiter USE, USA, US1 und US2 vorgesehen. Bei der hier dargestellten Ausführungsform werden die integrierten Antiparalleldioden D1, D2 für die Stromführung entgegen der Durchlassrichtung des jeweiligen Transistors GT1, GT2 verwendet. Die Last ist hier ein auch rückspeisender Gleichspannungsmotor M mit einer Vorschaltdrossel. Die Ansteuersignale sind mit sₐ₁ bzw. sₐ₂ und die Kollektor-Emitter-Spannungen mit Uₛ₁ bzw. Uₛ₂ bezeichnet.

Falls eine Verwendung der internen Dioden D1, D2 wegen deren geringen Stromtragfähigkeit vermieden werden soll, kann man gemäß der Schaltung nach Fig. 5 die internen Dioden D1, D2 durch Verwendung zweier Hilfsdioden D1h, D2h abkoppeln. Wie ersichtlich fließt Strom in Einspeiserichtung über den IGBT-Transistor GT2 und die Diode D2h, in Rückspeiserichtung jedoch über die Diode D1h und den IGBT-Transistor GT1.

Die Schutzschaltung nach der Erfindung kann direkt in ein Stromrichtergerät eingebaut werden oder als Option geräteextern in die Gleichstromleitung eingebaut werden. Die gezeigten Schaltungen können im Rahmen der Erfindung dem Wissen des Fachmanns entsprechend modifiziert werden. Beispielsweise können IGBT-Transistoren parallelgeschaltet werden, falls höhere Ströme geschaltet werden sollen.

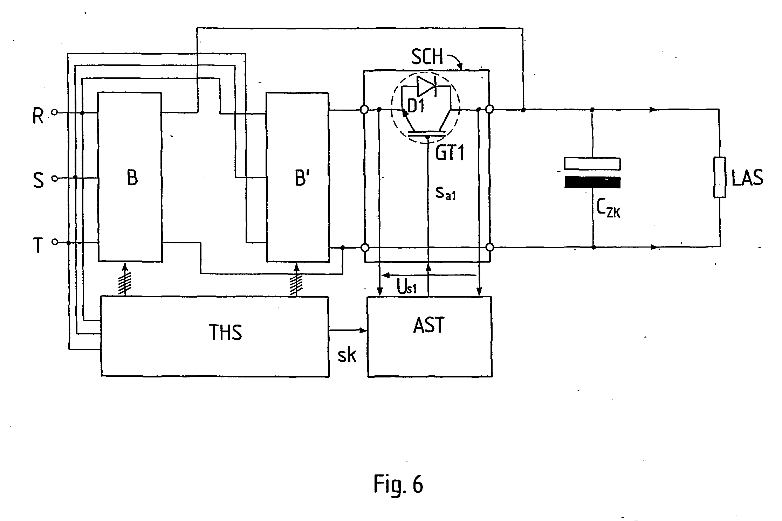

Die Ausführung nach Fig. 6 entspricht prinzipiell jeder nach Fig. 2 bzw. Fig. 3, doch ist die Schutzschaltung geräteintern nur in den Rückspeisezweig geschaltet. Dies bringt den Vorteilt, dass im Einspeisezweig kein Stromfluss über die Antiparalleldiode D1 erfolgen muss, und somit in dieser Stromrichtung keine Zusatzverluste auftreten. Ebenso entfällt hier ein zusätzlicher Aufwand für eine Diode D1p gemäß Fig. 3.

## Patentansprüche

1. Schutzschaltung (SCH) für eine netzgeführte Thyristorbrücke (B, B'), welche zur Energiespeisung eines an sie angeschlossenen Energiekreises sowie zur Rückspeisung aus diesem Kreis eingerichtet ist, und welche zwischen die Thyristorbrücke und den Energiekreis geschaltet ist,
**dadurch gekennzeichnet, dass**
in einem Längszweig der Schutzschaltung zumindest ein, im Rückspeisesinn gepolter IGBT-Transistor (GT1, GT2) mit einer Antiparalleldiode (D1, D2; D1p) vorgesehen ist, welcher bei Auftreten eines Kipperkennungssignals (sₖ, Uₛ₁), das einer dem Transistor zugeordneten Ansteuerschaltung (AST) zugeführt ist, abschaltbar ist.

2. Schutzschaltung (SCH) nach Anspruch 1, **dadurch gekennzeichnet, dass** in dem Längszweig der Schutzschaltung (SCH) zwei gegensinnig gepolte IGBT-Transistoren (GT1, GT2) in Serie angeordnet sind. (Fig. 4).

3. Schutzschaltung (SCH) nach Anspruch 1, **dadurch gekennzeichnet, dass** in ihrem Längszweig ein erster IGBT-Transistor (GT1) in Serie mit einer ersten Hilfsdiode (D1h) liegt und parallel zu dieser ersten Serienschaltung eine zweite Serienschaltung, bestehend aus einem zweiten IGBT-Transistor (GT2) und einer zweiten Hilfsdiode (D2h), wobei innerhalb der Serienschaltungen die Dioden und Transistoren gleichsinnig gepolt sind, die Dioden und Transistoren einer Serienschaltung jedoch gegensinnig zu den Dioden und Transistoren der anderen Serienschaltungen (Fig. 5).

4. Schutzschaltung (SCH) nach einem der Ansprüche 1 bis 3, **dadurch gekennzeichnet, dass** der Antiparalleldiode (D1) eines IGBT-Transistors (GT1) eine externe Diode (D1p) parallelgeschaltet ist (Fig. 3).

5. Schutzschaltung (SCH) nach einem der Ansprüche 1 bis 4, **dadurch gekennzeichnet, dass** ihr Eingang und/oder Ausgang durch einen Überspannungsableiter (USE, USA) geschützt ist.

6. Schutzschaltung (SCH) nach einem der Ansprüche 1 bis 5, **dadurch gekennzeichnet, dass** die Kollektor-Emitter-Strecke des zumindest einen IGBT-Transistors (GT1, GT2) durch einen Überspannungsableiter (US1, US2) geschützt ist.

7. Schutzschaltung (SCH) nach einem der Ansprüche 1 bis 6, **dadurch gekennzeichnet, dass** das Kipperkennungssignal (sₖ) von einer Steuerschaltung (THS) der Thyristorbrücke (B, B') geliefert ist. (Fig. 2)

8. Schutzschaltung nach einem der Ansprüche 1 bis 7, **dadurch gekennzeichnet, dass** als Kipperkennungssignal (sₐ₁) die Höhe der Sättigungsspannung der zumindest einen IGBT-Transistors (GT1, GT2) herangezogen ist.

## Claims

1. A protective circuit (SCH) for a line-commutated thyristor bridge (B, B') that is set up to feed energy to an energy circuit connected thereto and also to feed energy back from said circuit, which protective circuit is connected between said thyristor bridge and said energy circuit,
**characterized in that**
at least one IGBT transistor (GT1, GT2) having the polarity of the feed-back direction is provided along with an anti-parallel diode (Dl, D2; D1p) in series with said protective circuit, which transistor can be switched off on the occurrence of a runaway detection signal (Sₖ, Uₛ₁), which is fed to a control circuit assigned to said transistor.

2. A protective circuit (SCH) as defined in claim 1, **characterized in that** in the series circuit of the protective circuit (SCH) two IGBT transistors (GT1, GT2) of opposing polarities are connected in series. (Fig. 4)

3. A protective circuit (SCH) as defined in claim 1, **characterized in that** a first IGBT transistor (GT1) is in series with a first auxiliary diode (D1h) and parallel to this first series circuit there is a second series connection, consisting of a second IGBT transistor (GT2) and a second auxiliary diode (D2h), and, within the series circuits, the diodes and transistors have the same polarity but the diodes and transistors of one of the series circuits have a polarity which is opposite to that of the diodes and transistors in the second series circuit. (Fig. 5).

4. A protective circuit (SCH) as defined in any one of claims 1 to 3, **characterized in that** an external diode (D1p) is connected in parallel to the antiparallel diode (DI) of one IGBT transistor (GT1) (Fig. 3).

5. A protective circuit (SCH) as defined in any one of claims 1 to 4, **characterized in that** its input and/or output are protected by an over-voltage arrestor (USE, USA).

6. A protective circuit (SCH) as defined in any one of claims 1 to 5, **characterized in that** die collector-emitter path of at least one IGBT transistor (GT1, GT2) is protected by an over-voltage arrestor (US1, US2).

7. A protective circuit (SCH) as defined in any one of claims 1 to 6, **characterized in that** the runaway detection signal (Sₖ) is furnished by a control circuit (THS) of the thyristor bridge (B, B'). (Fig. 2)

8. A protective circuit as defined in any one of claims 1 to 7, **characterized in that** the value of the saturation voltage of at least one of the IGBT transistors (GT1, GT2) is used as the runaway detection signal (sₐ₁).

## Revendications

1. Circuit de protection (SCH) pour un pont thyristor (B, B') commuté par le réseau, lequel est installé pour l'alimentation en énergie d'un circuit d'énergie branché sur celui-ci ainsi que pour le recyclage de l'énergie à partir de ce circuit, et commuté entre le pont thyristor et le circuit d'énergie **caractérisé en ce que** dans une branche longitudinale du circuit de protection au moins un transistor IGBT (GT1, GT2) polarisé dans le sens de l'alimentation de retour est prévu avec une diode antiparallèle (D1, D2, D1p), lequel peut être déconnecté lors de l'apparition d'un signal de reconnaissance de bascule (S_{K}, U₅₁), qui est amené à un circuit de commande (AST) agencé dans le transistor.

2. Circuit de protection (SCH) selon la revendication 1, **caractérisé en ce que** dans la branche longitudinale du circuit de protection (SCH) deux transistors IGBT (GT1, GT2) polarisés en sens inverse sont agencés en série (Figure 4).

3. Circuit de protection (SCH) selon la revendication 1, **caractérisé en ce que** dans son bras longitudinal, un premier transistor IGBT (GT1) est monté en série avec une première diode auxiliaire (D1h) et parallèlement à ce premier circuit en série, un deuxième circuit en série, composé d'une deuxième transistor IGBT (GT2) et d'une deuxième diode auxiliaire (D2h), sachant qu'à l'intérieur des circuits en série les diodes et les transistors sont polarisés dans le même sens, les diodes et les transistors d'un circuit en série sont montés cependant en sens inverse par rapport aux diodes et aux transistors des autres circuits en série (Figure 5).

4. Circuit de protection (SCH) selon l'une des revendications 1 à 3 **caractérisé en ce qu'**à la diode antiparallèle (D1) d'un transistor IGBT (GT1) est commutée en parallèle une diode externe (D1p) (Figure 3).

5. Circuit de protection (SCH) selon l'une des revendications 1 à 4, **caractérisé en ce que** son entrée ou/et sa sortie est protégée par un coupe-circuit de surtension (USE, USA).

6. Circuit de protection (SCH) selon l'une des revendications 1 à 5, **caractérisé en ce que** la distance collecteur-émetteur d'au moins un transistor IGBT (GT1, GT2) est protégé par un coupe-circuit de surtension (US1, US2).

7. Circuit de protection (SCH) selon l'une des revendications 1 à 6, **caractérisé en ce que** le signal de reconnaissance de bascule (Sₖ) est fourni depuis un circuit de commande (THS) du pont thyristor (B, B') (Figure 2).

8. Circuit de protection selon l'une des revendications 1 à 7, **caractérisé en ce que** la hauteur de la tension de saturation d'au moins un transistor IGBT (GT1, GT2) est utilisée comme signal de reconnaissance de bascule (sₐ₁).
